# EUROPÄISCHE PATENTSCHRIFT

(11) **EP 0 527 791 B1**
(45) Veröffentlichungstag und Bekanntmachung des Hinweises auf die Patenterteilung: **20.07.1994**
(21) Anmeldenummer: 91908162.0
(22) Anmeldetag: 22.04.1991
(51) Int. Cl.: G06F 15/70

(54) **VERFAHREN ZUR ZEITREKURSIVEN BEWEGUNGSSCHÄTZUNG UND ZUR VERFOLGUNG BEWEGTER OBJEKTE BEI DER ANALYSE ZEITLICHER FOLGEN DIGITALER BILDER**
PROCESS FOR TIME RECURRING ASSESSING OF MOVEMENTS AND FOR TRACKING MOVING OBJECTS IN THE ANALYSIS OF TIME SEQUENCES OF DIGITAL IMAGES
PROCEDE POUR UNE EVALUATION RECURSIVE DANS LE TEMPS DE MOUVEMENT ET POUR LA POURSUITE D'OBJETS EN MOUVEMENT PAR L'ANALYSE DE SUCCESSIONS D'IMAGES NUMERIQUES

(30) Priorität: 08.05.1990 EP 90108666
(43) Veröffentlichungstag der Anmeldung: 24.02.1993
(73) Patentinhaber: SIEMENS AKTIENGESELLSCHAFT, 80333 München (DE)
(72) Erfinder: KARMANN, Klaus-Peter, Dr., W-8000 München 40 (DE)
(86) Internationale Anmeldenummer: EP9100769
(87) Internationale Veröffentlichungsnummer: WO9117513

(56) Entgegenhaltungen:
- US-A- 4 777 530
- IEEE Transaction on Pattern Analysis and Machine Intelligence, Band PAM-1, Nr. 1, Januar 1979, IEEE, (New York, US), K. Price et al.: "Matching segments of Images" Seiten 110-116
- Pattern Recognition Letters, Band 9, Nr. 5, Juni 1989, (Amsterdam, NL), P. M. Griffin: "Correspondence of 2-D projections by bipartite matching", Seiten 361-366
- IEEE Tansactions on Pattern Analysis and Machine Intelligence, Band PAMI-2, Nr. 6, November 1980, IEEE, (New York, US), S. Tsuji et al.: "Tracking and segmentation of moving objects in dynamic line images", Seiten 518-519

## Beschreibung

Bei verschiedenen Anwendungen des maschinellen Sehens, wie z.B. in der Robotik, Bildcodierung, bei Überwachungs- und Steuerungsaufgaben, insbesondere in der videobasierten Straßenverkehrssteuerung, werden Verfahren und Systeme benötigt, mit deren Hilfe bewegte Objekte in zeitlichen Folgen digitaler Bilder detektiert, segmentiert und verfolgt werden können, und welche die Bewegungsparameter der bewegten Objekte automatisch ermitteln.

In der Robotik ermöglichen derartige Systeme die koordinierte Zusammenarbeit eines Automaten mit anderen Automaten oder Menschen und tragen auf diese Weise zur Steigerung der Produktivität und Arbeitssicherheit (Kollisionsvermeidung) bei. In der Bildcodierung ermöglicht die Kenntnis der Bewegungsparameter bewegter Objekte eine erheblich verbesserte Vorhersage zukünftiger Bilder und damit eine bedeutende Reduktion der zu übertragenden Datenraten bzw. der zu speichernden Datenmengen.

Schließlich werden zur Überwachung und Steuerung von Anlagen, insbesondere zur Steuerung des Straßenverkehrs durch videobasierte Systeme, die Positionen und Bewegungsdaten aller relevanten Objekte benötigt.

Die bekannten Verfahren zur Bewegungsschätzung in zeitlichen Folgen digitaler Bilder lassen sich zunächst in zwei Klassen einteilen:
- eine Gruppe von Verfahren basiert auf dem Matching von zwei aufeinanderfolgenden Bildern der Folge bzw. auf dem Matching bestimmter Teilbi lder, Kanten oder Texturen. Dabei werden entsprechende Bereiche in beiden Bildern durch Verschieben dieser Bereiche zur Deckung gebracht (Matching) (T.S. Huang (ed.), Image Sequence Analysis, Springer, New York, 1981). Eine weitverbreitete Variante ist das sog. Block-Matching (A.v. Brandt, W. Tengler "Obtaining smoothed optical flowfields by modified block matching", Proc. of the 5th Scand. Conf. on Image Analysis, Stockholm, June 2-5 1987, pp. 523-528), bei dem im allgemeinen quadratische Teilbilder (Blöcke) durch Verschieben zur Deckung gebracht werden.

Neben den Matching-Verfahren zur Bewegungsschätzung gibt es andere Verfahren (T.S.Huang (ed.) Image Sequence Analysis, Springer, New York 1981) (Transformationsverfahren, Gradientenverfahren), die nicht allgemein anwendbar sind, und auf die hier nicht näher eingegangen werden soll.

Die bekannten zeitlich lokalen Matching-Verfahren haben hauptsächlich drei Schwierigkeiten:
- Beim Block-Matching werden die Blöcke häufig von Objektgrenzen durchquert, so daß den betreffenden Blöcken kein eindeutiger Bewegungsvektor zugeordnet werden kann. Versucht man dieses Problem durch die Wahl kleinerer Blockgrößen zu umgehen, benötigt man Methoden zur Glättung von Bewegungsvektorfeldern, da andernfalls das statistische Rauschen die Bewegungsschätzung stören würde. Ganz allgemein wird bei jeder Art von Matching eine Methode zur Glättung der Bewegungsvektorfelder benötigt. Eine Glättung ist aber nur sinnvoll innerhalb der Kanten eines Objekts, da die Objektkanten natürliche Unstetigkeitsstellen des Bewegungsvektorfeldes sind.
- Das Block-Matching eignet sich nicht zur Schätzung von Drehbewegungen. Andere Matching-Verfahren sind nur unter idealen Bedingungen (Rauschfreiheit) zur Schätzung von Drehbewegungen geeignet.
- Beim Vergleich (Matching) lediglich zweier Bilder einer Folge bleiben die Ergebnisse der Analyse vorhergehender Bilder gänzlich außer Acht. Anstatt die Ergebnisse früherer Analyseschritte zur Aufwandsreduktion bei der laufenden Schätzung heranzuziehen, behandeln zeitlich lokale Schätzverfahren das Problem zu jedem Zeitpunkt in der gleichen Weise wie das anfängliche Schätzproblem.

Die der Erfindung zugrundeliegende Aufgabe besteht darin, ein Verfahren anzugeben, das die oben geschilderten Probleme löst. Diese Aufgabe wird mit Hilfe eines Verfahrens zurzeitrekursiven Bewegungsschätzung und zur Verfolgung bewegter Objekte bei der Analyse zeitlicher Folgen digitaler Bilder mit Merkmalen nach Anspruch 1 gelöst.

Das erfindungsgemäße Verfahren basiert auf einem Matching bewegter Segmente in zeitlich benachbarten Bildern. Solche Methoden sind zwar aus den Veröffentlichungen von K. Price et al: "Matching Segments of Images", Seiten 110 - 116 aus IEEE Transactions on Pattern Analysis and Machine Intelligence, Band PAMI-1, Nr. 1, Januar 1979 und S. Tsuji et al: "Tracking and segmentation of moving objects in dynamic line images", Seiten 516 - 522 aus IEEE Transactions on Pattern Analysis and Machine Intelligence, Band PAMI-2, Nr. 6, November 1980 bekannt. Im Gegensatz zu den bekannten Verfahren ist das erfindungsgemäße Verfahren aber
- auf beliebige, also auch rotatorische Objekt bewegungen anwendbar;
- nicht durch Störungen odergarden vollständigen Ausfall einzelner Messungen (Bi Idstörungen, vorübergehende Verdeckungen) zu beeinträchtigen und
- erheblich genauer und gleichzeitig weit weniger aufwendig als die bekannten Verfahren,

weil beim erfindungsgemäßen Verfahren
- anstelle rechteckiger Blöcke oder einzelner Bildteile (wie z. B. Kanten) zusammenhängende Segmente für das Matching verwendet werden, die die Form der bewegten Objekte widerspiegeln, und deren Kanten regelmäßig mit den Objektkanten identisch sind,
- über reine Translationen hinaus auch Rotationen und Kombinationen aus diesen (affine Transformationen, Galilei-Transformationen) für das Matching verwendet werden und deshalb auch Rotationsgeschwindigkeiten gemessen und Drehwinkel geschätzt werden können und weil
- die gemessenen Bewegungsparameter beim erfindungsgemäßen Verfahren zur Korrektur der vorhergesagten Zustandsgrößen innerhalb eines zeitrekursiven Schätzverfahrens herangezogen werden.

Die Erfindung sieht die Verwendung von Kalman-Filtern zur Vorhersage und Korrektur der Zustandsgrößen vor. Die Werte der Matching-Funktion sind zur Bewertung der Güte der Messung der Bewegungsparametervorgesehen. Eine derartige Steuerung der zeitrekursiven Bewegungsschätzung in Abhängigkeitvon der Güte der einzelnen Messungen der Bewegungsparameter macht die Bewegungsschätzung besonders robust gegen Störungen und unempfindlich gegen statistisches Rauschen in der Bildfolge. Eine örtliche Glättung der Bewegungsparameter wird daher nicht benötigt, sondern vielmehr durch eine zeitlich glättende Wirkung der zeitrekursiven Berechnungsweise ersetzt. Gleichzeitig erreicht das erfindungsgemäße Verfahren zur zeitrekursiven Bewegungsschätzung eine besonders hohe Genauigkeit, die auch unterhalb der durch die räumliche Abtastung der einzeln Bilder gegebenen Auflösung liegen kann (Subpixel-Genauigkeit).

Die Zustandsgrößen umfassen im allgemeinen diejenigen Eigenschaften bewegter Objekte, die zur Beschreibung ihrer Bewegungen geeignet sind. Dazu gehören die momentanen Lagen, Geschwindigkeiten (z. B. Schwerpunktsgeschwindigkeiten, Drehgeschwindigkeiten) und gegebenenfalls Beschleunigungen und ähnliche Größen (Bewegungsenergie, Drehimpuls, etc.). Das erfindungsgemäße Verfahren eignet sich zur Behandlung aller Bewegungen die vornehmlich parallel zur Bildfläche ablaufen unter Einschluß beliebiger Drehungen. Für eine Reihe von Anwendungen bei denen hauptsächlich translatorische Bewegungen von Bedeutung sind, ist eine Beschränkung auf reine Translationen besonders vorteilhaft, weil sie mit einer erheblichen Reduktion des Rechenaufwandes (und damit der Kosten) verbunden ist. Im allgemeinen Fall werden Objekt bewegungen als Transformationen der Bildebene beschrieben. Solange die bewegten Objekte starre Körper oder aus starren Körpern zusammengesetzt sind, bedeutet eine Beschränkung der Transformationen auf die Gruppe der affinen Transformationen (Galilei-Transformationen) keine Einschränkung der Leistung des Verfahrens, bewirkt aber eine angemessene Begrenzung des Aufwandes.
Figur 1 zeigt in schematischer Weise einen Ablaufplan des erfindungsgemäßen Verfahrens.
Figur 2 zeigt in schematischer Weise einen Signalflußplan des erfindungsgemäßen Verfahrens.

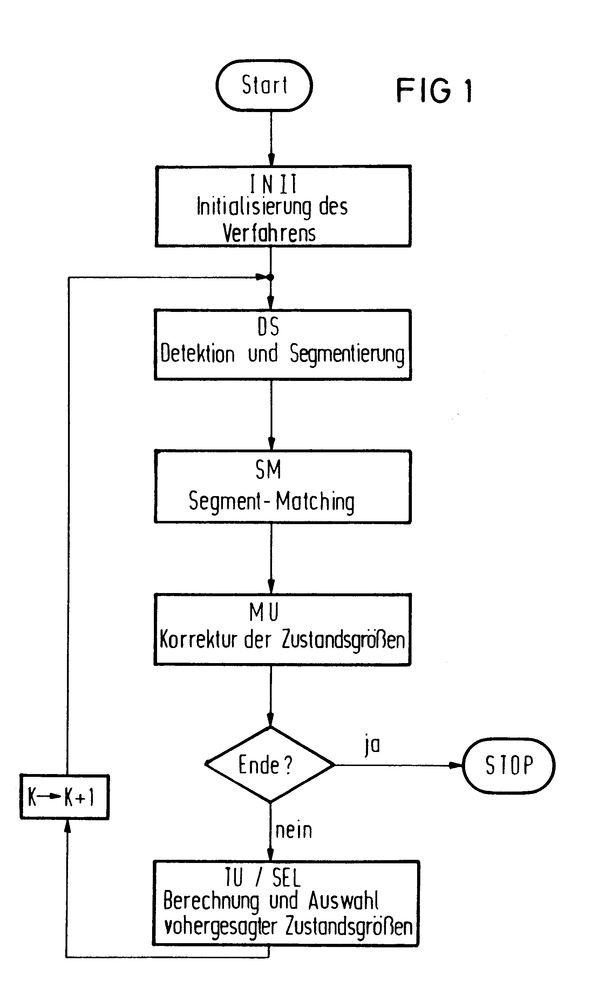

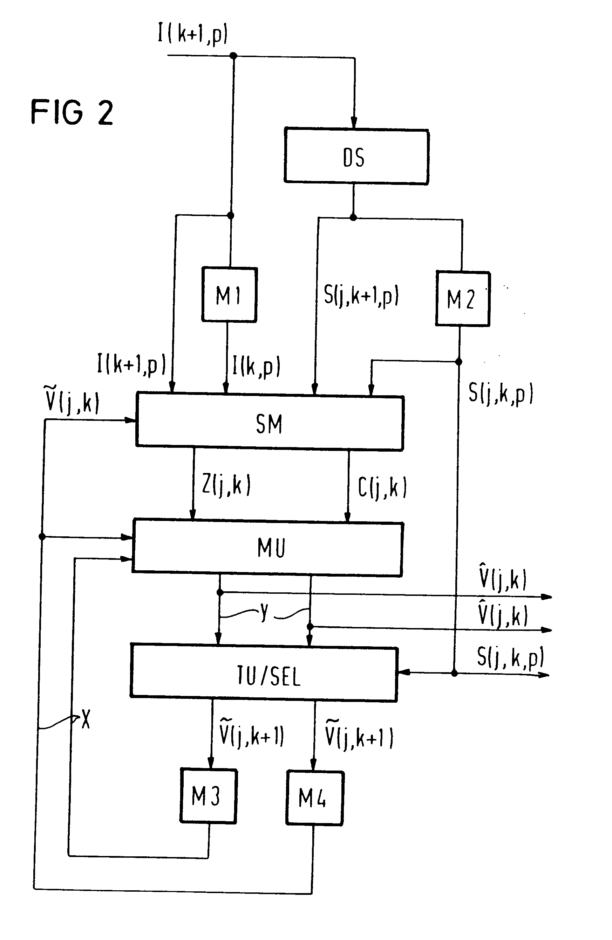

Im folgenden wird die Erfindung anhand eines bevorzugten Ausführungsbeispieles und anhand der Figuren 1 und 2 ausführlich erläutert.

Figur 1 zeigt den grundsätzlichen Ablauf des erfindungsgemäßen Verfahrens, wie er in Anspruch 1 beschrieben ist. Beim Start des Verfahrens wird das Verfahren initialisiert (INIT), indem vorhergesagten Zustandsgrößen X Anfangswerte zugewiesen werden und der Zeitindex k auf den Wert 1 gesetzt wird. Daran anschließend laufen für alle Bilder der Folge, d. h. für alle Zeitpunkte k die folgenden Schritte ab: Durch Detektion und Segmentierung bewegter Objekte (DS) werden den bewegten Segmenten der Bilder einer zeitlichen Folge binäre Segmentfunktionen (S) zugeordnet. Die Bewegungsparameter dieser bewegten Segmente werden durch Maximierung (SM) einer Matching-Funktion C gemessen. Mit Hilfe dieser gemesse nen Bewegungsparameter werden aus den vorhergesagten Zustandsgrößen X korrigierte Zustandsgrößen Y berechnet (MU). Ist das Ende der Bildfolge erreicht, wird das Verfahren gestoppt. Anderenfalls werden aus den korrigierten Zustandsgrößen vorhergesagte Zustandsgrößen für den folgenden Zeitschritt berechnet (TU) bzw. ausgewählt (SEL) und der Zeitindex k um den Wert 1 erhöht, womit die in Figur 1 abgebildete Schleife erneut durchlaufen wird bis das Ende der Bildfolge ist.

Figur 2 zeigt einen detaillierten Datenflußplan, in dem die wichtigsten Variablen sowie die Ein- und Ausgangsgrößen des Verfahrens, ihre gegenseitige Abhängigkeit und ihre Verarbeitung durch die Verfahrensschritte anschaulich dargestellt sind.

Beim Start wird das Verfahren initialisiert (INIT), in dem allen vorhergesagten Zustandsgrößen XAnfangswerte zugewiesen werden und der Zeitindex k auf den Wert 1 gesetzt wird. Der Vektor der Zustandsgrößen (X bzw. Y) umfaßt für jedes bewegte Segment des laufenden Bildes die zur Beschreibung der Bewegung geeigneten Eigenschaften, also vorzugsweise den (Schwerpunkts-) Lagevektor i , r, den Geschwindigkeitsvektor ^{$}Vv, v und evtl. den Beschleunigungsvektor des betreffenden Segments.

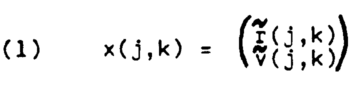

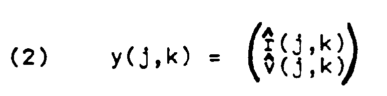

Sind Drehbewegungen zu erwarten, so umfaßt derZustandsvektor (zusätzlich) eine Variable zur Beschreibung der Drehlage (Winkel) und zum Beispiel eine Winkelgeschwindigkeit. Sind am Anfang bereits Segmente bzw. Objekte und deren Zustandsgrößen bekannt, so besteht die Initialisierung (INIT) des Verfahrens darin, den vorhergesagten Zustandsgrößen (X) entsprechende Werte als Anfangswerte zuzuweisen. Bei der Verwendung von Kalman-Filtern zur rekursiven Schätzung umfaßt die Initialisierung auch die zugehörigen Kovarianzen (F.L. Lewis, Optimal Estimation, Wiley & Sons, New York, 1986). Diesen werden Werte zugeordnet, welche die anfängliche Kenntnis des Verfahrensanwenders über die Objekteigenschaften ausdrücken.

Liegen beim Start des Verfahrens noch keine Informationen über bewegte Objekte und deren Eigenschaften vor, so werden den Zustandsgrößen beliebige Werte innerhalb ihres Wertebereichs zugewiesen und den Kovarianzen entsprechend hohe Zahlenwerte zugewiesen. Ist beispielsweise über die Lage eines Objekts nichts bekannt und über seine Geschwindigkeit nur, daß sie zwischen 0 und 30 Pixeln pro Bildtakt liegen muß, und daß das Objekt sich von links nach rechts bewegt, so wäre der Lagevektor mit 0, die Geschwindigkeit mit 15 Pixeln pro Bildtakt zu initialisieren. Den entsprechenden Varianzen wären Werte zuzuordnen, die z. B. der Größe des Bildausschnitts entsprechen (falls bekannt ist, daß das Objekt im Bild zu sehen ist), bzw. einer Gleichverteilung auf dem Intervall (0, 30) entsprechen. Zur Analyse des Bildes mit dem Zeit index (k), dessen Intensität im Bildpunkt (p) der Bildebene mit I(k,p) bezeichnet wird, werden nun gemäß Anspruch 1 den bewegten Segmenten des Bildes I(k,p) binäre Segmentfunktionen S(j,k,p) zugeordnet, welche die Eigenschaft 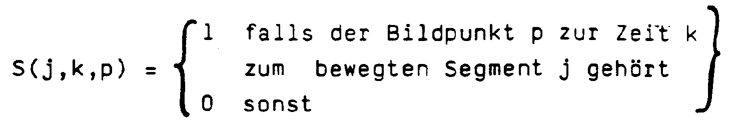 haben. Diese binären Segmentfunktionen S sind also jeweils nur innerhalb eines bewegten Segments von Null verschieden. Die Multiplikation einer beliebigen Funktion der Bildkoordinaten p mit einer Segmentfunktion innerhalb einer Summation über alle Bildpunkte entspricht folglich einer Einschränkung dieser Summation auf das betreffende bewegte Segment. Ein Produkt zweier Segmentfunktionen innerhalb einer solchen Summe beschränkt die Summation auf die Schnittmenge beider Segmente. Hierdurch wird gewährleistet, daß beim nachfolgendenen Matching (SM) nur die Intensitäten im Innern der beiden betroffenen Segmente berücksichtigt werden.

Die Segmentfunktionen (S) werden vorteilhaft mit Hilfe eines Verfahrens zur Detektion und Segmentierung bewegter Objekte (DS) aus der Bildfolge (I) gewonnen. Für diesen Zweck sind die in (K.P. Karmann, A. von Brand, Detection and Tracking of Moving Objects bei Adaptive Backround Extraction, Proc.6th SCTA, Oulu, Finland, June 1989, pp. 1501 1508) oder in (K.P. Karmann, A. von Brand, R. Gerl, Moving Object Segmentation Based on Adaptive Reference Images, 5th Eusipco 90, Barcelona, September 1990) beschriebenen Verfahren besonders geeignet. Die laufende Nummerierung der Segmentfunktionen kann in vorteilhafterWeise zum Beispiel mit einem Region Labeling Verfahren (Y. Shirai, Three Dimensional Computer Vision, Springer Verlag, New York, 1987, pp. 86 - 89) durchgeführt werden.

Um die Bewegungsparameter (Z) der bewegten Segmente zu messen, wird für jedes Segment ein Segment-Matching (SM) durchgeführt, bei dem die Parameter einer Transformation (T) durch Maximierung einer Matching-Funktion (C) gefunden werden, die aus den Segmentfunktionen (S) und den Intentitätsfunktionen (I) des laufenden und des vorhergehenden Bildes zum Beispiel nach der Formel 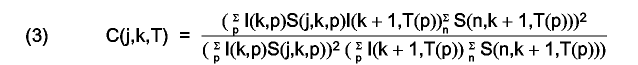 gebildet wird. Die Matching-Funktion C hängt dabei von der Transformation T ab, welche durch die zu messenden Bewegungsparameter parametrisiert ist. Diejenigen Werte der Parameter, fürwelche (C) maxi mal wird, werden als gemessene Bewegungsparameter des Segments j zur Zeit k aufgefaßt und mit Z(j,k) bezeichnet. Der maximale Wert C(j,k) = C(j,k,T(Z(j,k))) der Matchching Funktion ist umso größer, je ähnlicher die entsprechenden Intensitäten sind. Für den Fall, daß die bewegten Objekte praktisch homogene Intensität besitzen, mißt das Matching die Ähnlichkeit der Segmentformen. Das Verfahren ist also auch dann noch anwendbar, wenn aufgrund ungünstiger Beleuchtungsverhältnisse oder starken Rauschens ein Vergleich von Intensitäten unbrauchbar wird, solange die Segmentformen mit der Zeit wenig veränderlich sind.

Im Falle rein translatorischer Bewegungen ist es von Vorteil anstelle der Formel (3) die spezielle Matching-Funktion 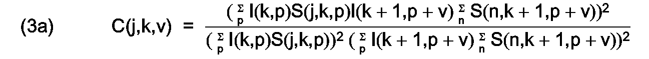 zu verwenden. Beide Matching-Funktionen haben den Vorteil, in mathematischer Hinsicht das Quadrat einer normierten Korrelationsfunktion zu sein und besitzen demnach die folgenden vorteilhaften Eigenschaften:
- ihre möglichen Werte liegen kontinuierlich zwischen 0 und 1,
- der Wert 1 entspricht einem idealen Matching, d.h. die bewegten Segmente sind mit Hilfe der Transformation identisch aufeinander abbildbar.
- der Wert 0 beschreibt den Fall, bei dem die Segmente ohne Überlappung sind.

Hierdurch kann der Zahlenwert der Matching-Funktion als Maß für die Güte des Matchings herangezogen werden.

Die Maximierung der Matching-Funktion nach Formel (3a) ist jedoch wesentlich weniger aufwendig als die Maximierung der Matching-Funktion nach Formel (3), da im letzten Fall neben einem Verschiebungsvektor auch noch andere Bewegungsparameter, wie z.B. Drehwinkel zu bestimmen sind.

Die Maximierung der Matching-Funktion (C) geschieht vorzugsweise mit Hilfe eines Suchverfahrens (H. Niemann, H. Bunke, Künstliche Intelligenz in Bild- und Sprachanalyse, B. G. Teupner, Stuttgart 1987), bei dem die Matching-Funktion für alle Parameter eines Suchbereichs ausgewertet werden muß. Lokale Opti mierungsverfahren sind nicht anwendbar, da die Matching-Funktion eine große Zahl lokaler Maxima aufweist, die zu dem gesuchten globalen Maximum in keiner Beziehung stehen. Der Aufwand für die Suche kann erheblich reduziert werden, wenn bei der Wahl des Suchbereichs der Umstand berücksichtigt wird, daß die gemessenen Werte der Bewegungsparameter (Z) häufig in der Nähe der diesen Bewegungsparametern entsprechenden Komponenten der vorhergesagten Zustandsgrößen liegen. Dazu sollten z. B. diese Komponenten der vorhergesagten Zustandsgrößen als Ausgangspunkt der Suche verwendet werden und der Suchbereich in Abhängigkeit von den Prädiktionsfehler-Kovarianzen der Kalman-Filter gewählt werden. Da diese Kovarianzen wenigstens nach dem Abklingen einer Startphase regelmäßig erheblich kleiner als die Fläche des Bildausschnitts sein werden, ist auch der Suchbereich für die Maximierung der Matching-Funktion im allgemeinen erheblich kleiner als der Bildausschnitt, wenn man als Suchbereich z.B. die Prädiktionsfehler-Kovarianzellipse oder - etwas einfacher - das einhüllende randparallele Rechteck dieser Kovarianzellipse wählt.

Das Ergebnis dieser Maximierung der Matching-Funktion (C) für jedes bewegte Segment in I(k,p) sind ein Satz von gemessenen Bewegungsparametern Z(j,k) und der maximale Wert der Matching-Funktion C(j,k) für jedes Segment Mit Hilfe dieser gemessenen Größen werden für eine Menge vorhergesagter Zustandsgrößer (X) korrigierte Zustandsgrößen (Y) ermittelt. Diese Korrektur (MU) kann auf vorteilhafte Weise mit Hilfe eines Kalman-Filters nach der Formel 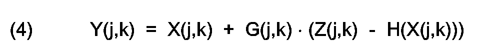 durchgeführt werden, wobei G(j,k) die Kalman-Verstärkung für das Segment j, zur Zeit kund H eine Meßabbildung bezeichnen. Bei der Verwendung von Kalman-Filtern sind entsprechende Gleichungen zur Korrektur der Prädiktionsfehler-Kovarianzen bekannt. (F.L. Lewis, Optimal Estimation, Wiley & Sons, New York, 1986). Die Meßabbildung beschreibt den Zusammenhang zwischen den Zustandsgrößen (X, Y) und den Bewegungsparametern (Z), wählt also z. B. aus dem Zustandsvektor die den Bewegungsparametern entsprechenden Komponenten aus, oder berechnet letztere aus dem Zustandsvektor.

Die Berechnung der Kalman-Verstärkung G(j,k) kann mit Hilfe der exakten Theorie der Kalman-Filteroder in einer Näherung für diese Theorie durchgeführt werden. Die näherungsweise Berechnung von G(j,k) kann zu einer bedeutenden Aufwandsreduktion führen. In den Fällen, in denen G(j,k) unter anderem aus einer Folge von Meßrauschkovarianzen R(j,k) berechnet wird, (F.L.Lewis, Optimal Estimation, Wiley & Sons, New York 1989) ist es besonders vorteilhaft, diese Meßrauschkovarianzen nach der Formel 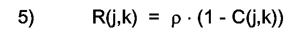 aus den maximalen Werten CU,k) der Matching-Funktion zu berechnen. Dabei ist p eine positiv definite Matrix, deren Matrixelemente den maximalen Meßrauschkovarianzen entsprechen, die bei der betrachteten Anwendung auftreten können.

Die korrigierten Zustandsgrößen (Y) oder ausgewählte Komponenten (z.B. Lagevektoren, Geschwindigkeiten, Winkelgeschwindigkeiten, etc.) der korrigierten Zustandsgrößen sind das eigentliche Endergebnis des Verfahrens. Diese Größen können ausgegeben oder für weitergehende Analyseschritte anderen Verfahren (Steuerung, Alarmauslösung) als Eingangsgrößen zur Verfügung gestellt werden.

Fürdie Weiterführung der zeitrekursiven Bewegungsschätzung dervorliegenden Erfindung bei den nachfolgenden Bildern der zeitlichen Folge ist aber noch ein abschließender Schritt durchzuführen, bei dem aus den korrigierten Zustandsgrößen (Y) vorhergesagte Zustandsgrößen (X) für den nachfolgenden Zeitpunkt berechnet werden. Der Schritt TU entspricht dem Prädi ktionsschritt (time up date) eines Kalman-Filters und kann nach der allgemeinen Formel 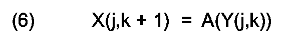 durchgeführt werden. Die Funktion A (.) beschreibt hierbei die zu erwartende zeitliche Entwicklung der Zustandsgrößen aller Segmente j. Im Falle einer rein translatorischen Bewegung kann die Vorhersage z. B. die spezielle einfache Form 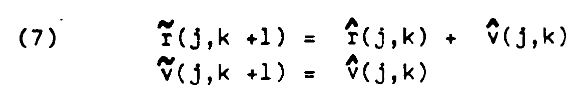 annehmen, wobei(j,k +1) bzw.(j,k+1) die vorhergesagten Lage- bzw. Geschwindigkeitsvektoren des Segments j zur Zeit k+1 bezeichnen und bzw. j,k) die korrigierten Lage-bzw. Geschwindigkeitsvektoren des Segments j, zur Zeit k bezeichnen.

Bei der Verwendung von Kalman-Filtern sind auch die Prädiktionsfehlerkovarianzen (F.L. Lewis, Optimal Estimation, Wiley & Sons, New York, 1986) einem Prädiktionsschnitt nach der allgemeinen Formel 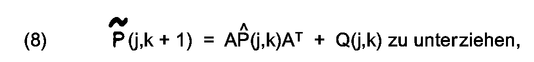 wobei P und P die vorhergesagte bzw. korrigierte Prädiktions fehlerkovarianzmatrix, A bzw. A^{T} die Linearisierung der Funktion A(.) bzw. deren transponierte Matrix und Q(j,k) die Systemrauschkovarianzmatrixfürdas Segment zur Zeit K bezeichnen. Die Systemrauschkovarianzmatrix Q beschreibt allgemein die Genauigkeit der Systemfunktion A und regelt die Adaptivität der Kalman-Filter. Sie kann dem Verfahren als Entwurfsparameter vorgegeben sein oder in Abhängigkeit von der Güte des Segment-Matchings SM, ausgedrückt durch C(j,k) z.B nach der Formel 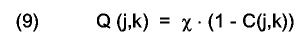 berechnet werden. Dabei ist χ eine positiv definite Matrix, deren Matrixelemente den maximalen Systemrauschkovarianzen entsprechen, die bei der betrachteten Anwendung auftreten können. Zur Reduktion des Aufwandes, kann die exakte Berechnung der Prädiktionsfehlerkovarianzen durch eine genäherte Berechnung ersetzt werden.

Damit ist die Berechung der vorhergesagten Zustandsgrößen x(j,k+1) abgeschlossen. Diese können zur Durchführung des Verfahrens im folgenden Zeitschritt verwendet werden.

Befinden sich mehrere bewegte Objekte im Bildausschnitt oder werden bewegte Objekte durch meherere Segmente dargestellt, kann die Zuordnung der vorhergesagten Zustandsgrößen x(j, k+1) zu den bewegten Segmenten des Bildes I(k+1), die durch die Segmentfunktionen S(n, k+1, p) dargestellt werden, ein nichttriviales Problem sein. In diesen Fällen sind daher für alle bewegten Segmente S(n,k+1,p) des Bildes l(k+1) passende vorhergesagte Zustandsgrößen x(n,k+1) aus der Menge {x(j,k+1)} der vorhergesagten Zustandsgrößen auszuwählen (SEL).

Bei der Initialisierung des Verfahrens wird dazu jedem Segment des ersten Bildes einfach ein anfänglicher vorhergesagter Zustandsvektor zugewiesen.

Nach dem k-ten Zeitschritt gibt es jedoch für jedes Segment S(j,k) des Bildes I(k) einen vorhergesagten Zustandsvektor X(j,k+1). Für jedes Segment S(n,k+1) des Bildes I(k+1) ist nun aus dieser Menge vorhergesagter Zustandsvektoren ein passender vorhergesagter Zustandsvektor x(n,k+1) auszuwählen oder, falls kein passender Zustandsvektor existiert, ein vorhergesagter Zustandsvektor festzulegen.

Dazu werden die Schwerpunkte aller bewegten Segmente S(n,k+1) des Bildes I(k+1) durch Aufsummation aller zu S(n,k+1) gehörigen Bildpunktvektoren 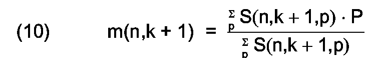 gemessen.

Gibt es nun ein Segment oder mehrere Segmente S(n,k+1) deren Schwerpunkte m(n,k+1) innerhalb einer z.B. durch die zu den vorhergesagten Lagen (j,k+1 ) gehörenden Kovarianzellipsen bestimmten Umgebung eines odermehrerervorhergesagte Lagevektoren (j,k+1 ) liegen, dann wird der Lagevektor (i,k+1)demjenigen Segment S(n,k+1) zugeordnet, dessen Schwerpunktvektor m(n,k+1) den geringsten Abstand zu (i,k+1) aufweist. Eine andere Möglichkeit der Zuordnung besteht darin, \ (i,k+1) demjenigen Segment S(n,k+1) zuzuordnen, für welches eine Funktion der Form 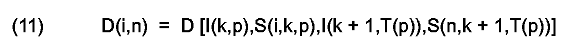 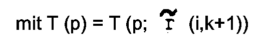 also T (p) = p+ r (i,k+1) im Fall reiner Translationen maximal wird. Die Funktion D kann z.B. die gleiche spezielle funktionale Form wie die Funktion C haben.

Den verbleibenden Segmenten S(n,k+1) des Bildes l(k+1), denen auf diese Weise kein vorhergesagter Zustandsvektor zugeordnet werden kann, werden anfängliche Zustandsvektoren wie bei der Initialisierung des Verfahrens zugeordnet. Dabei werden die gemessenen Schwerpunkte m(n,k+1) dieser Segmente als anfängliche Lagevektoren r(n,k+1) herangezogen. Alle übrigen Komponenten ihresZustandsvektors, wie auch die Kovarianzen sind entsprechend der vorliegenden Information festzulegen. Sind bei dieser Auswahl (SEL) noch Zustandsvektoren x(j,k+1) übriggeblieben, die keinem Segment S(n,k+1) des Bildes l(k+1) zuzuordnen waren, und deren Kovarianzen wesentlich kleiner als die Bildfläche (oder eine andere anwendungsabhängig vorzugebende Größe) sind, so werden diese im zeitrekursiven Schätzverfahren als Zustandsgrößen ohne Messung behandelt, indem die entsprechenden Meßrauschkovarianzen R(j,k+1 ) auf maximale Werte (p) gesetzt werden.

Alle anderen Zustandsvektoren x(j,k+1) insbesondere solche mit großen Kovarianzen, die keinem Segment zuzuordnen sind, werden aus dem zeitrekursiven Schätzprozeß eliminiert.

Auf diese Weise ist die Verfolgung auch solcher Objekte möglich, die vorübergehend (teilweise) verdeckt sind, oder die auf Grund ungünstiger Aufnahmebedingungen vorübergehend nicht sichtbar sind.

## Patentansprüche

1. Verfahren zur zeitrekursiven Bewegungsschätzung und zur Verfolgung bewegter Objekte bei der Analyse zeitlicher Folgen digitaler Bilder, bei dem zu Beginn einer Menge von vorhergesagten Zustandsgrößen (X) eines zeitrekursiven Filters zur Berechnung korrigierter Zustandsgrößen (Y) Anfangswerte zugewiesen werden, dadurch gekennzeichnet, daß für jedes Bild I(k) einer zeitlichen Folge I(1),I(2),...,I(k) die nachstehenden Schritte ablaufen:
a) es werden bewegte Segmente in einem Bild I(k) der zeitlichen Folge digitaler Bilder detektiert und diesen bewegten Segmenten werden binäre Segmentfunktionen (S) mit der Eigenschaft 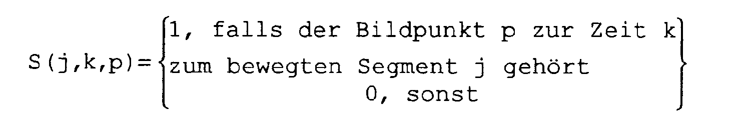 zugeordnet;
b) durch Maximierung einer Matching-Funktion (C), welche unter Verwendung einer durch einen Satz von Bewegungsparametern (Z) parametrisierten Familie von Transformationen (T) aus den Segmentfunktionen (S) und den digitalen Bildern (I) nach der allgemeinen Formel 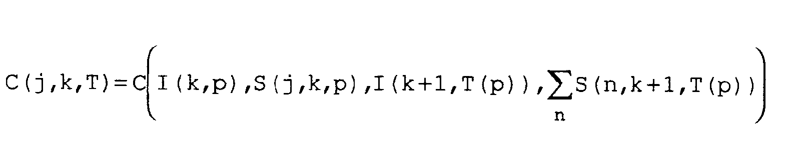 gebildet wird, werden Bewegungsparameter (Z) für diese bewegten Segmente gemessen;
c) aus der Menge vorhergesagter Zustandsgrößen (X) werden mit Hilfe der gemessenen Bewegungsparameter (Z) korrigierte Zustandsgrößen (Y) berechnet;
d) aus diesen korrigierten Zustandsgrößen (Y) werden mit Hilfe des zeitrekursiven Filters die vorhergesagten Zustandsgrößen (X) für den folgenden Zeitpunkt berechnet;
hierbei bezeichnet
k einen Zeitindex,
p die Koordinaten der Bildpunkte,
j einen Segmentindex,
S(j,k,p) den Wert der Segmentfunktion des bewegten Segments j zur Zeit k am Bildpunkt P,
S(n,K+1,T(p)) den Wert der Segmentfunktion des bewegten Segments n zur Zeit k+1 am Bildpunkt T(p),
I(k,p) die Intensität des Bildes zur Zeit k am Bildpunkt p,
I(k+1,T(p)) die Intensität des Bildes zur Zeit k+1 am Bildpunkt T(p), und
T(p) den durch die Transformation T transformierten Bildpunkt des Bildpunktes p.

2. Verfahren nach Anspruch 1, dadurch gekennzeichnet, daß die betrachtete Familie von Transformationen (T) nur affine Transformationen der Bildebene umfaßt.

3. Verfahren nach Anspruch 1, dadurch gekennzeichnet, daß dir betrachtete Familie von Transformationen (T) nur Translationen umfaßt.

4. Verfahren nach einem der vorhergehenden Ansprüche, dadurch gekennzeichnet, daß die Zustandsgrößen (X, Y) die momentanen Geschwindigkeiten der bewegten Segmente beschreiben.

5. Verfahren nach einem der vorhergehenden Ansprüche, dadurch gekennzeichnet, daß die Zustandsgrößen (X, Y) auch die momentanen Lagen der bewegten Segmente beschreiben.

6. Verfahren nach einem der vorhergehenden Ansprüche, dadurch gekennzeichnet, daß die Zustandsgrößen (X, Y) auch das Beschleunigungsverhalten der bewegten Segmente beschreiben.

7. Verfahren nach einem der vorhergehenden Ansprüche, dadurch gekennzeichnet, daß die Matching-Funktion (C) nach der Formel 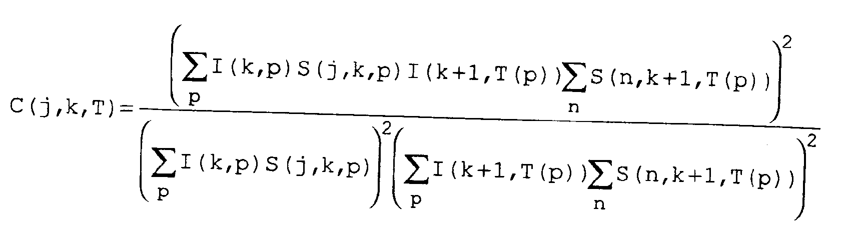 gebildet wird.

8. Verfahren nach einem der vorhergehenden Ansprüche, dadurch gekennzeichnet, daß die Matching-Funktion (C) nach der Formel 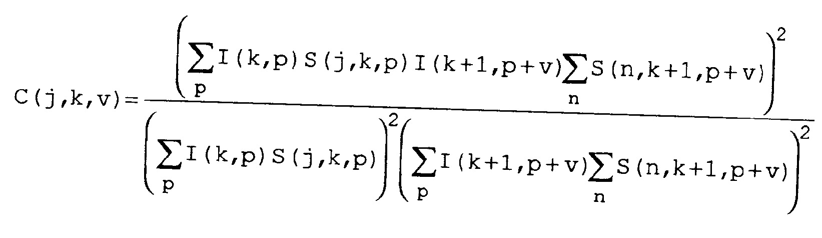 gebildet wird, wobei v einen Verschiebungsvektor in der Bildebene bezeichnet.

## Claims

1. Process for time-recursive movement assessment and for tracking moving objects in the analysis of time sequences of digital images, in which initial values are assigned at the start to a set of predicted state variables (X) of a time-recursive filter for calculating corrected state variables (Y), characterized in that the following steps are executed for each image I(k) of a time sequence 1(1),1(2),...,I(k):
a) moving segments are detected in an image I(k) of the time sequence of digital images and these moving segments are allocated binary segment functions (S) having the characteristic 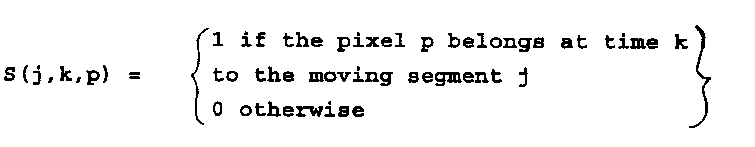
b) movement parameters (Z) for these moving segments are measured by maximizing a matching function (C) which is formed with the use of a family, which is parameterized by a set of movement parameters (Z), of transformations (T) from the segment functions (S) and the digital images (I) in accordance with the general formula 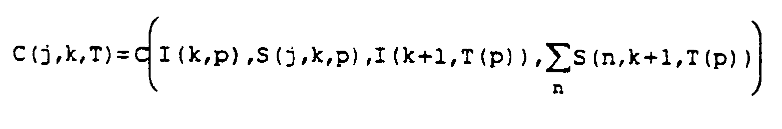
c) corrected state variables (Y) are calculated from the set of predicted state variables (X) with the aid of the measured movement parameters (Z);
d) the predicted state variables (X) for the subsequent instant are calculated from these corrected state variables (Y) with the aid of the time-recursive filter;
in which steps
k denotes a time index,
p denotes the coordinates of the pixels,
j denotes a segment index,
S(j,k,p) denotes the value of the segment function of the moving segment j at time k at the pixel p,
s(n, k+1, T(p)) denotes the value of the segment function of the moving segment n at time k+1 at the pixel T(p),
I(k,p) denotes the intensity of the image at time k at the pixel p,
l(k+1, T(p)) denotes the intensity of the image at time k+1 at the pixel T(p), and
T(p) denotes the pixel of the pixel p transformed by the transformation T.

2. Process according to Claim 1, characterized in that the family of transformations (T) under consideration comprises only affine transformations of the image plane.

3. Process according to Claim 1, characterized in that the family of transformations (T) under consideration comprises only translations.

4. Process according to one of the preceding claims, characterized in that the state variables (X, Y) describe the instantaneous speeds of the moving segments.

5. Process according to one of the preceding claims, characterized in that the state variables (X, Y) also describe the instantaneous positions of the moving segments.

6. Process according to one of the preceding claims, characterized in that the state variables (X, Y) also describe the acceleration characteristics of the moving segments.

7. Process according to one of the preceding claims, characterized in that the matching function (C) is formed in accordance with the formula

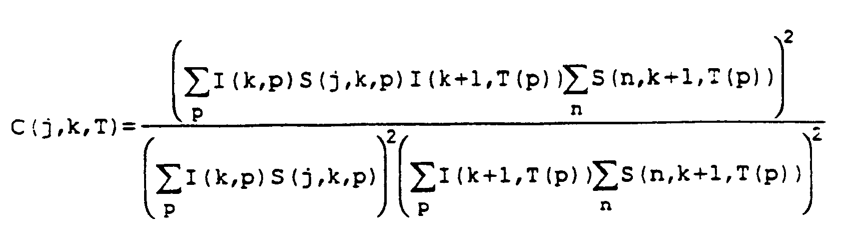

8. Process according to one of the preceding claims, characterized in that the matching function (C) is formed in accordance with the formula 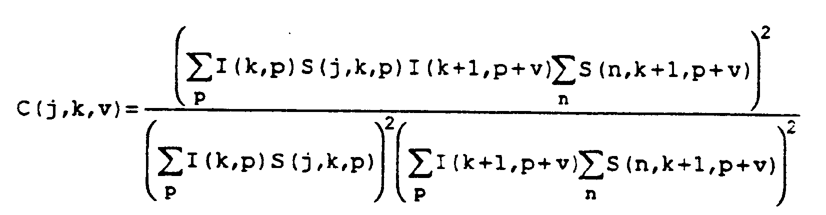 v denoting a displacement vector in the image plane.

## Revendications

1. Procédé pour l'esti mation récursive dans le temps d'un déplacement et pour la poursuite d'objets en mouvement, par l'analyse de successions dans le temps d'images numériques, procédé dans lequel des valeurs initiales sont affectées au début d'un ensemble de grandeurs (X) d'états prédites d'un filtre récursif dans le temps, en vue du calcul de grandeurs (Y) d'états corrigées, caractérisé en ce que pour chaque image I(k) d'une succession dans le temps I(1), 1(2), ... I(k), les opérations suivantes se déroulent :
a) on détecte des segments en déplacement dans une image I(k) de la succession dans le temps d'images numériques, et on associe à ces segments en déplacement des fonctions de segment (S) binaires, ayant la propriété 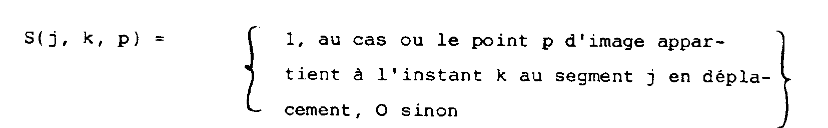
b) on mesure des paramètres (Z) de déplacements pour ces segments en déplacement par maximisation d'une fonction (C) d'adaptation qui est formée d'une famille de transformations (T), paramétrée par un jeu de paramètres (Z) de déplacement, à partir des fonctions (S) de segments et des images numériques (I), selon la forme générale 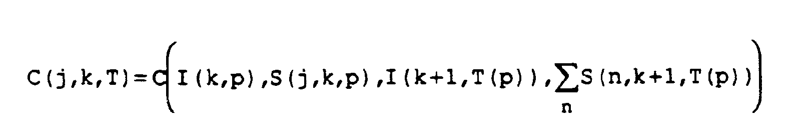
c) à partir de l'ensemble de grandeurs (X) d'état prédites, on calcule des grandeurs (Y) d'états corrigées à l'aide des paramètres (Z) de déplacement mesurés,
d) à partir de ces grandeurs (Y) d'état corrigées, on calcule les grandeurs (X) d'état prédites, pour l'instant suivant à l'aide du filtre récursif dans le temps ;
k, désignant ici un repère temporel
p, les coordonnées des points d'image,
j, un repère de segment,
SU, k, p), la valeur de la fonction de segment du segment j en déplacement, à l'instant k, au point p d'image,
S(n, K+1, T(p)), la valeur de la fonction de segment du segment n en déplacement à l'instant k+1, au joint T(p) d'image,
I(k, p), l'intensité de l'image, à l'instant k, au point p d'image,
l(k+1, T(p)), l'intensité de l'image, à l'instant k+1, au point T(p) d'image, et
T(p) le point d'image transformé par la transformation T du point p d'image.

2. Procédé selon la revendication 1, caractérisé en ce que la famille considérée de transformations (T) ne comprend que des transformations affines du plan d'image.

3. Procédé selon la revendication 1, caractérisé en ce que la famille considérée de transformations (T) ne comprend que des translations.

4. Procédé selon l'une des revendications précédentes, caractérisé en ce que les grandeurs (X, Y) d'états décrivent les vitesses instantanées des segments en déplacement.

5. Procédé selon l'une des revendications précédentes, caractérisé en ce que les grandeurs (X, Y) d'états décrivent également les positions instantanées des segments en déplacement.

6. Procédé selon l'une des revendications précédentes, caractérisé en ce que les grandeurs (X, Y) d'états décrivent également le comportement d'accélération des segments en déplacement.

7. Procédé selon l'une des revendications précédentes, caractérisé en ce que la fonction (C) d'adaptation a la formule :

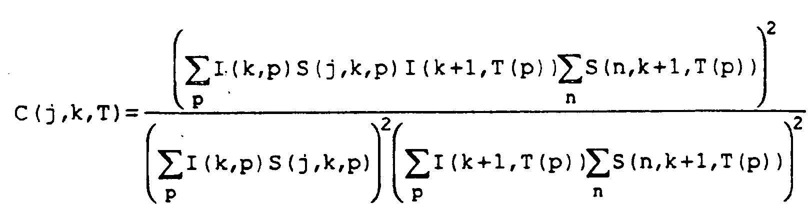

8. Procédé selon l'une des revendications précédentes, caractérisé en ce que la fonction (C) d'adaptation est établie selon la formule 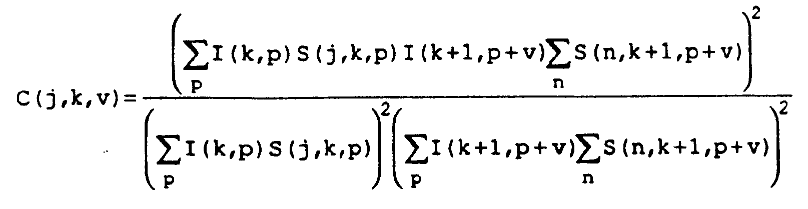 dans laquelle V est un vecteur de déplacement par translation dans le plan de l'image.
